# EUROPEAN PATENT APPLICATION

(11) **EP 4 570 951 A1**
(43) Date of publication of application: **18.06.2025**
(21) Application number: 23216901.1
(22) Date of filing: 14.12.2023
(51) Int. Cl.: C25B 1/04, C25B 11/031, C25B 11/04, C25B 11/048, C25B 11/042, C08J 5/22

(54) **METHOD FOR PRODUCING A POROUS ELECTRODE**

(71) Applicant: VITO NV, 2400 Mol (BE)
(72) Inventor: CHEN, Zhiyuan, 2400 Mol (BE); DE SCHEPPER, Wim, 2400 Mol (BE); TILAHUN TSEHAYE, Misgina, 2400 Mol (BE); VAES, Jan, 2400 Mol (BE)
(74) Representative: AWA Benelux

(57) **Abstract**

The present invention relates to a method (1) for producing a porous electrode comprising: preparing (2) a slurry comprising a solvent, between 1 % and 25 % by weight of a polymeric binder material and between 10 % and 80 % by weight of particles comprising an electrochemically active material, based on the total weight of the slurry, wherein the polymeric binder material is at least partially dissolved in the solvent; shaping (3) the slurry, thereby obtaining a green body; subjecting the green body to phase inversion (4), thereby forming the porous electrode, which comprises a porous matrix and the particles comprising the electrochemically active material, wherein the porous matrix comprises the polymeric binder material; wherein the weight ratio of the polymeric binder material to the particles in the slurry is between 2:98 and 50:50, and a total amount of the polymeric binder material and the particles in the slurry is between 32 % and 80 % by weight, based on the total weight of the slurry. The invention further relates to a porous electrode comprising a porous matrix comprising a polymeric binder material, and particles comprising an electrochemically active material.

## Description

### Technical field

The present invention is related to a method of producing a porous electrode, such as a porous electrode comprising an electrochemically active material. The present invention is further related to a porous electrode, in particular as obtained by methods of the invention.

### Background art

Water electrolysis is an electrochemical process that involves the decomposition of water into its constituent elements, hydrogen and oxygen, using an external electrical energy source. It is a promising technology with a wide range of applications, including hydrogen production for clean fuel, energy storage, and industrial processes. Water electrolysis plays an important role in the development of sustainable energy solutions. As a clean and renewable process, it enables the production of hydrogen, a versatile energy carrier that can be used in fuel cells, industrial processes, and as a clean transportation fuel. When coupled with renewable energy sources like solar and wind, water electrolysis offers an efficient method for energy storage and grid balancing, addressing the intermittency of renewables.

Electrolysis is carried out in an electrolysis cell. An electrolysis cell consists of a membrane, an anode and a cathode which are immersed in an electrolyte. When an electric current is applied through an external power source, redox reactions occur at the electrodes.

There are primarily two types of electrolytic media: solid electrolytes and liquid electrolyte solutions. Known solid electrolytes include proton exchange membranes, anion exchange membrane and solid oxide ceramic electrolytes. Known liquid electrolytes include aqueous alkaline solutions and aqueous acidic solutions.

In proton exchange membrane electrolysis, a proton exchange membrane (PEM) separates the anode and cathode compartments, and conducts protons. PEM electrolysis has gained importance due to its ability to operate at relatively low temperatures and pressures. The PEM electrolysis technology offers fast response times, high efficiency, and good controllability. However, the reliance on expensive platinum-based catalysts poses cost challenges for widespread adoption.

Solid oxide ceramic electrolytes are used in solid oxide electrolysis cells (SOECs), which operate at high temperatures. The high-temperature operation allows for efficient heat integration with other industrial processes. However, SOECs require robust materials that can withstand these high temperatures.

In acidic electrolysis, an aqueous solution comprising a strong acid such as sulphuric acid and hydrochloric acid is used as the electrolyte. However, managing concentrated acid electrolytes poses corrosion problems, and the technical solutions are expensive.

In alkaline electrolysis, an aqueous solution comprising a strong alkaline electrolyte solution such as potassium hydroxide is used. Alkaline electrolysis is one of the earliest and most mature electrolysis technologies. It typically operates at relatively elevated temperatures (60-90 °C) and pressures up to 30 bar. Today, typically used electrodes include nickel-based electrodes and iron-based electrodes. The process is characterized by its relatively low capital cost, long-term stability, and scalability, making it suitable for large-scale hydrogen production.

Commercially available electrodes for electrolysis cells used in industrial alkaline electrolysis systems include electrodes based on nickel deposited on steel, such as steel meshes coated with nickel, and solid nickel, such as nickel stretched metal, nickel wire meshes and nickel foams. However, these electrodes tend to have limited catalytic activity, i.e. limited conversion rates of water into hydrogen and oxygen at a given power input to the cell, and are often either rigid and/or brittle.

Freestanding µm-thin nanomesh electrodes exceeding 100x current density enhancement for high-throughput electrochemical applications, N. Plankensteiner, R. Rupp et al., Materials Today Energy, vol. 30, 2022, 101172 discloses the fabrication of a freestanding metal electrodes having a thickness of a few micrometers, for use in water electrolysis. The electrode is a three-dimensional (3D) porous nanomesh consisting of a 3D-network of regular interconnected nanowires. The nanomesh has a high surface area and a high porosity of between 85 % and 97 %. To ensure that the nanowire-network is mechanically stable while maintaining its accessibility from all sides to allow for water and gas transport, a porous support structure is required.

Improving the water splitting performance of nickel electrodes by optimizing their pore structure using a phase inversion method, Ruigen Ding, Shengsheng Cui et al., Catalyst Science & Technology, issue 14, 2017, discloses porous nickel electrodes produced by a method including phase inversion and tape casting, followed by a heat treatment to remove the polymer. The nickel electrodes contain finger-like straight open pores with an average diameter of approx. 100 µm and smaller pores with an average diameter between 1 µm and 3 µm in the walls. The electrode can be used for the oxygen evolution reaction (OER), as well as for the hydrogen evolution reaction (HER).

Disadvantages of the foregoing porous nanomesh electrodes is that that they are brittle, limiting their use; and in that the pores in the electrodes obtained using a phase inversion method are large, with a high internal electrical resistance and consequently a low electrochemical activity.

WO99/45604 discloses a method for preparing an electrode film, comprising applying a mixture comprising an anodic or cathode active material, a polymer and a carrier solvent to a supporting material, and contacting the mixture with a non-solvent of the polymer to extract at least a portion of the carrier solvent from the mixture, thereby forming the electrode film. A plasticizer is used to facilitate the formation of pores in the electrode film. The electrode film is laminated to a current collector for use in an electrochemical cell. Alternatively, the supporting material can be a current collector onto which the mixture is directly applied.

WO2012001061 discloses a method of making a gas diffusion electrode, comprising casting a first suspension of electrically conductive material particles in a first binder solution, followed by casting a second suspension comprising hydrophobic material particles in a second finder solution on the first layer. Both layers are then subjected to phase inversion, thereby obtaining the gas diffusion electrode comprising porous layers, wherein the second layer is a water-repellent layer. Alternatively, the first layer can be subjected to phase inversion prior to casting the second layer. The porous hydrophobic layer provides hydrophobic channels for gas transport to the first layer. The electrically conductive particles can be metal particles or carbon particles. The gas diffusion electrode can be used in a membrane electrode assembly.

A disadvantage of the foregoing method is the need for a hydrophobic layer, which renders the process more complex and expensive.

WO2014020151 discloses a method of producing a solid electrode suitable for use in electrolysis of water in a liquid electrolyte medium. The method comprises preparing a solution by dissolving a solid ion-conducting polymeric binder in a volatile solvent, wherein the polymeric binder is selected so as to allow diffusion of the gas produced during electrolysis of water. A catalyst material powder and advantageously comprising one or more of Ni, Co, Pt, Ir, Mo, Cr Fe, V, Mn, Ru, Pd, C, Ti, W, Si, Bi, P, Nb, Zr, Ta and Os, their alloys and their oxides is added to the solution. The solution is then deposited on an electrically conductive support or current collector, and the solvent is removed. The porous conductive metallic support or current collector is part of the obtained electrode.

A disadvantage of ion conductive membranes is that they are expensive and chemically unstable in alkaline solution at high temperatures. A further disadvantage is the need for a porous conductive metallic support or current collector onto which the solution is applied and which forms part of the electrode to obtain sufficient mechanical strength to allow handling and use of the electrode. However, such an additional compound increases the cost of the electrode and renders the electrode rigid.

### Summary of the invention

The present invention aims to overcome one or more of the above drawbacks. It is an aim of the invention to provide methods of obtaining a porous electrode, in particular a porous electrode comprising a porous matrix comprising a polymeric binder material, and particles comprising an electrochemically active material, which is less complex. It is a further aim to provide methods of producing porous electrodes that are self-standing, i.e. methods which exclude the need for a supportive compound being incorporated or added to the porous electrode. It is a further aim to provide methods which are less expensive than existing methods.

Another aim of the present invention is to provide a porous electrode, in particular a porous electrode comprising a porous matrix comprising a polymeric binder material, and particles comprising an electrochemically active material, which is self-standing. It is a further aim to provide porous electrodes which are flexible. Yet a further aim is to provide porous electrodes which, in use, have an excellent electrochemical performance and efficiency, excellent mass transport properties, ionic diffusion, and/or lifetime.

The terms "self-standing product" and "self-supporting product" are used, interchangeably, in the present disclosure for products which can be used without the need of a supporting structure, for example which can be manipulated, handled, stored, transported and used without the need of a supporting structure. In other words, a self-standing or a self-supporting product is a product that has sufficient mechanical strength and/or mechanical integrity to be used on its own, without requiring any supporting material to provide mechanical reinforcement or support to maintain the structural integrity and shape of the product.

The term "flexible electrode" is used in the present disclosure for electrodes which can be bent, folded, or rolled up, and can return to their original shape without having any visible damage.

According to a first aspect of the invention, there is provided a method for producing a porous electrode as set out in the appended claims.

The porous electrode produced by the method comprises or substantially consists of a porous matrix and particles comprising or substantially consisting of an electrochemically active material. The porous matrix comprises or substantially consists of a polymeric binder material.

The method comprises preparing a slurry, shaping the slurry into a green body, and subjecting the green body to phase inversion, thereby obtaining the porous electrode.

The slurry comprises a solvent, a polymeric binder material and particles comprising or substantially consisting of an electrochemically active material.

Advantageously, the polymeric binder material is at least partially, preferably substantially entirely, dissolved in the solvent, for example at least 50 % of the polymeric binder material is dissolved in the solvent, such as at least 75 %, at least 80 %, preferably at least 90 %, more preferably at least 95 %, at least 98 %, most preferably at least 99 %, or 100%.

A total amount of polymeric binder material and particles in the slurry is between 32 % and 80 % by weight, preferably between 35 % and 75 % by weight, more preferably between 35 % and 70 % by weight, based on the total weight of the slurry.

The inventors have surprisingly discovered that when the slurry comprises between 32 % and 80 % by weight of polymeric binder material and particles, based on the total weight of the slurry, a self-standing or self-supporting porous electrode is obtained, in particular being flexible as well, and advantageously excluding the need to incorporate or provide a supportive substrate, such as a mesh or a grid, into the porous electrode.

The weight ratio of the polymeric binder material to the particles in the slurry is between 2:98 and 50:50, preferably between 5:95 and 50:50, more preferably between 10:90 and 50:50, for example between 30:70 and 50:50, or between 40:60 and 50:50.

Advantageously, the polymeric binder material comprises or substantially consists of a non-ion conductive polymer. Non-limiting examples of non-ion conductive polymers include polysulfone (PSU), polyethersulfone, polyvinylidene fluoride, poly(acrylonitrile), polyethylene-co-vinylalcohol, polycarbonate, polyimide, polyamide, polyamide-imide, polyether imide, ionomers, N-ionomers, cellulose acetate, and copolymers of two or more thereof.

Advantageously, the slurry comprises between 1 % and 25 % by weight of the polymeric binder material, preferably between 1% and 20 % by weight, based on the total weight of the slurry.

Advantageously, the slurry comprises between 10 % and 80 % by weight of particles comprising or substantially consisting of an electrochemically active metal, preferably between 15 % and 75 % by weight, more preferably between 15 % and 70 % by weight, based on the total weight of the slurry.

The term "electrochemically active metal" or "electrochemically active material" as used herein, is used to refer to the capacity of a material, including, without being limited thereto, a metallic solid, a metal oxide or a metal dichalcogenide, to participate in electrochemical reactions in which electrons are exchanged between chemical substances.

Advantageously, the electrochemically active material comprises or substantially consists of an electrochemically active metal selected from the group consisting of nickel, tin, copper, iron, manganese, cobalt, zinc, titanium, bismuth, selenium, and noble metals.

Advantageously, the electrochemically active material, in particular the electrochemically active metal, is present in the particles as one or a combination of a metallic solid, a metal oxide, or a metal dichalcogenide.

Advantageously, the particles have an average particle size between 1 nm and 250 µm, preferably between 5 nm and 200 µm, more preferably between 10 nm and 100 µm. The average particle size can be determined using any a method known to the skilled artisan, including for example laser diffraction or electron microscopy such as Scanning Electron Microscopy (SEM). Advantageously, the average particle size of the particles in the slurry is measured by means of SEM.

Advantageously, the particles comprising or substantially consisting of the electrochemically active material have a multimodal, in particular a bimodal particle size distribution. A multimodal particle size distribution implies that fractions with different ranges in (average) particle sizes are used in the manufacturing of the porous electrodes with the methods as herein disclosed. For example, in case of a bimodal particle size distribution one fraction of the particles has a size in a first size range, for example the micrometer range, and a second fraction of the particles has a size a second size range, for example in the nanometer range. Whereas the nanoparticles provide a high electrochemically active surface area but are more expensive, the larger particles in the micrometer range ensure good electrochemical contact and percolation and are less expensive. Consequently, a combination of nanoparticles and particles in the micrometer range, i.e. particles having a bimodal particle size distribution, allows to combine the advantages of both size ranges of particles, and to reduce the cost when compared to using only nanoparticles,

Advantageously, the particles comprising or substantially consisting of the electrochemically active material have a bimodal particle size distribution. Advantageously, between 25 % and 75 % of the particles have a size between 1 µm and 250 µm, preferably between 5 µm and 200 µm, more preferably between 5 µm and 150 µm, and between 75 % and 25 % of the particles have a size between 1 nm and 750 nm, preferably between 5 nm and 500 nm, more preferably between 10 nm and 250 nm. In other words, the particles consist of a mixture of a fine fraction and a coarse fraction, wherein: the fine fraction has an average particle size between 5 nm and 500 nm (as measured by laser diffraction or SEM) and the coarse fraction has an average particle size between 1 µm and 250 µm (as measured by laser diffraction or SEM), wherein the fine fraction is between 25% and 75% by weight of the particles and the coarse fraction is between 25 % and 75 % by weight.

Advantageously, the solvent has a boiling point of at least 175 °C, preferably at least 180 °C, such as at least 190 °C at an atmospheric pressure of 1 bar.

Advantageously, the slurry can further comprise between 0.5 % and 15 % by weight of a pore forming agent, preferably between 1 % and 10 % by weight, based on the total weight of the slurry. It will be understood that the optional use of a pore forming agent, and the amount thereof, depends on the composition of the slurry, on the structure of the slurry components, and on the degree of porosity of the porous electrode that is to be obtained or realised.

Advantageously, shaping of the slurry into a green body can be performed by methods known in the art comprises one or a combination of electrospinning, casting, or 3D-printing of the slurry.

Advantageously, phase inversion of the green body comprises exposing it to, e.g. contacting it with, a non-solvent for the polymeric binder material. This induces demixing of the green body into a polymeric binder material rich phase and a polymeric binder material poor phase. Upon further separation, the solubility of the polymeric binder material in the solvent is reduced and the polymeric binder material precipitates, so that a solid phase with specific porous morphology is formed, thereby obtaining the porous electrode comprising or substantially consisting of a porous matrix comprising or substantially consisting of the polymeric binder material, and the particles comprising or substantially consisting of an electrochemically active material.

Advantageously, the solvent comprises a polar aprotic solvent and the non-solvent for the polymeric binder material comprises a polar protic solvent.

According to a second aspect of the invention, there is provided a porous electrode as set out in the appended claims.

The porous electrode is advantageously made, i.e. prepared, produced or manufactured, by a method according to the first aspect of the invention.

The porous electrode comprises or substantially consists of a porous matrix and particles comprising or substantially consisting of an electrochemically active material, wherein the porous matrix comprises or substantially consists of a polymeric binder material. Advantageously, the polymeric binder material and the particles comprising an electrochemically active material are as described hereinabove.

The porous electrode comprises between 2 % and 50 % by weight of polymeric binder material, preferably between 2 % and 45 % by weight, more preferably between 5 % and 40 % by weight, based on the total weight of the porous electrode.

The porous electrode further comprises between 50 % and 98 % by weight of the particles, preferably between 55 % and 98 %, more preferably between 60 % and 95 %, based on the total weight of the porous electrode.

The porous electrode has a porosity equal to or higher than 40 %, preferably at least 50 %, more preferably at least 60 %, wherein the porosity is measured by mercury porosimetry. Advantageously, the porous electrode has a porosity between 40 % and 85 %, preferably between 50 % and 80 %, more preferably between 60 % and 80 %.

Advantageously, the pores of the porous electrode have an average pore size between 0.05 µm and 5 µm, preferably between 0.075 µm and 2.5 µm, more preferably between 0.1 µm and 1 µm, as determined by means of capillary flow porometry.

Advantageously, the porous electrode has an ex-situ gas permeability between 0.50 and 50 L/min/cm²/bar, preferably between 0.60 and 30 L/min/cm²/bar, more preferably between 0.70 and 30 L/min/cm²/bar.

According to a third aspect of the invention, there is provided a water electrolyser as set out in the appended claims. The water electrolyser comprises the porous electrode according to the second aspect of the invention, or a porous electrode obtained by a method according to the first aspect of the invention.

### Brief description of the figures

Aspects of the invention will now be described in more detail with reference to the appended drawings, wherein same reference numerals illustrate same features and wherein:
Figure 1 schematically represents a method according to the invention.
Figure 2 shows a porous electrode obtained by a method of the invention.
Figure 3 shows the SEM-image of the cross-section of a porous electrode obtained by a method of the invention.
Figure 4 shows the volumetric surface area (VSA) of 4 porous electrodes of the invention and a nickel foam reference.
Figure 5 shows the overpotential (oxygen evolution reaction, OER) at 5 mA/cm² of 4 porous electrodes of the invention and 3 nickel-based reference electrodes.
Figures 6A, 6B, 6C and 6D show the bendability and flexibility of a porous electrode obtained by a method of the invention.
Figure 7 shows the polarization curve of a porous electrode of the invention during alkaline water electrolysis at 70 °C and 10 bar.

### Description of embodiments

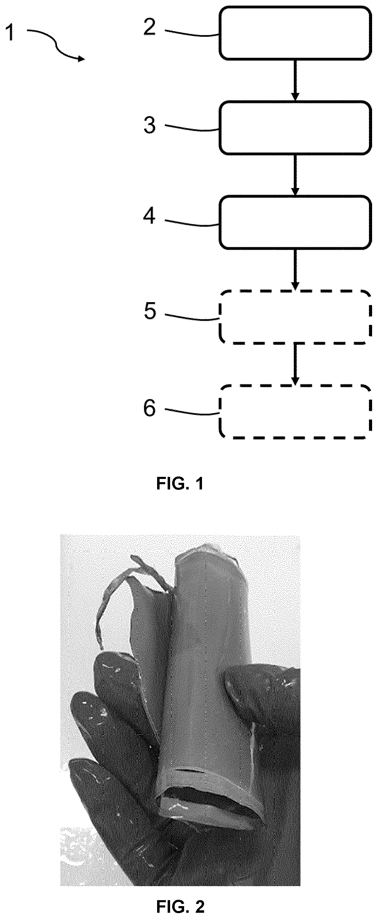

Fig. 1 schematically shows the production method 1 of a porous electrode, wherein the porous electrode comprises a porous matrix comprising a polymeric binder material, and particles comprising an electrochemically active material.

The method 1 comprises an operation 2 of preparing a slurry, an operation 3 of shaping the slurry into a green body, and an operation 4 of phase inversion of the green body. The method 1 further optionally comprises an operation 5 of drying the porous electrode, and/or one or more post-treatment operations 6.

The slurry comprises a polymeric binder material and particles comprising or substantially consisting of an electrochemically active material in a solvent. Advantageously, the polymeric binder material is substantially completely dissolved in the solvent.

Advantageously, the slurry comprises between 1 % and 25 % by weight of the polymeric binder material, preferably between 1% and 20 % by weight, based on the total weight of the slurry.

Advantageously, the polymeric binder material comprises or substantially consists of a phase inversion polymer, i.e. a polymer suitable for undergoing phase inversion. Examples of suitable polymeric binder materials (phase inversion polymers) include polysulfone, polyethersulfone, polyvinylidene fluoride, poly(acrylonitrile), polyethylene-co-vinylalcohol, polycarbonate, polyimide, polyamide, polyamide-imide, polyether imide, ionomers, N-ionomers, cellulose acetate, and copolymers of two or more thereof.

Advantageously, the polymeric binder material has an average molecular weight of at least 10000 g/mol, preferably at least 20000 g/mol, more preferably at least 25000 g/mol, most preferably at least 30000 g/mol.

The polymeric binder material can comprise or substantially consist of an inert (i.e. non-electrically conductive) phase inversion polymer, an electrically conductive phase inversion polymer, or a copolymer comprising a combination of the two. When the polymeric binder material comprises or substantially consists of an electrically conductive phase inversion polymer, it can contribute to the electrical conductivity of the porous electrode. Non-limiting examples of suitable electrically conductive polymers include polypyrrole (PPy), polyaniline (PAni), polythiophene (PTh), and poly(3,4-ethylenedioxythiophene) (PEDOT). Advantageously, PEDOT is used as phase inversion polymer in combination with another polymer, such as polystyrene sulfonate (PSS).

Advantageously, the slurry comprises between 10 % and 80 % by weight of particles comprising an electrochemically active material, preferably between 15 % and 75 % by weight, more preferably between 15 % and 70 % by weight, based on the total weight of the slurry. The inventors have discovered that for slurries comprising less than 10 % by weight of such particles, the metal loading in the produced porous electrode is insufficient to provide the porous electrode with a sufficient electrochemical activity and/or a sufficient electrical connectivity between the particles. In other words, slurries comprising less than 10 % by weight of particles lead to porous electrodes having inferior properties.

Advantageously, the particles comprising or substantially consisting of an electrochemically active material are selected so that they do not react with the solvent.

Advantageously, the electrochemically active material comprises of substantially consists of an electrochemically active metal selected from the group consisting of nickel, tin, copper, iron, manganese, cobalt, zinc, titanium, bismuth, selenium, and noble metals. A particularly preferred electrochemically active metal is nickel. Advantageously, the electrochemically active material, particularly the electrochemical active metal, is present in the particles as one or a combination of a metallic solid, a metal oxide, or a metal dichalcogenide, for example a selenide or a sulphide. Non-limiting examples include ZnO, BiSe, CuS, CuO and (Cu,Ag)OₓS_{y}.

Advantageously, the particles comprise two or more electrochemically active materials, for example in the form of core-shell particles, clusters on the particles, stabilized single atoms on the particles, and a particle having a layered structure. The particles can have various shapes, such as, without being limited thereto, a spherical shape or a cylindrical shape (e.g. a filament or a rod). The slurry can comprise particles having various shapes.

Advantageously, the particles have a bimodal particle size distribution. Advantageously, the bimodal particle size distribution is obtained by a mixture of fine particles and coarse particles. The fine particles advantageously have an average size of below 1 µm, such as 750 nm or less, preferably 500 nm or less (i.e., nanoparticles according to the IUPAC classification). The coarse particles advantageously have an average size of at least 1 µm, such as 5 µm or more.

Advantageously, the bimodal particle size distribution comprises between 25 % and 75 % of the particles, preferably between 40 % and 60 %, such as about 50 %, having a size between 1 µm and 250 µm, preferably between 5 µm and 200 µm, more preferably between 5 µm and 150 µm, and between 75 % and 25 % of the particles, preferably between 60 % and 40 %, such as about 50 %, having a size between 1 nm and 750 nm, preferably between 5 nm and 500 nm, more preferably between 10 nm and 250 nm.

The inventors have surprisingly discovered that using particles having a bimodal particle size distribution, and in particular obtained by a mixture of fine and coarse particles, allows to obtain a porous electrode having both an increased electrochemically active surface area and an excellent electrical connectivity, when compared to porous electrodes comprising only fine particles or only coarse particles.

Advantageously, the slurry comprises between 10 % by weight and 68 % by weight of a solvent, preferably between 15 % by weight and 60 % by weight, more preferably between 20 % by weight and 55 % by weight, most preferably between 20 % and 50 % by weight, based on the total weight of the slurry.

Advantageously, the solvent comprises or substantially consists of a dialkyl carbonate, a cycloaliphatic ether, a liquid pyrrolidone, an aliphatic ketone, or liquid piperidines, or combinations thereof.

The dialkyl carbonate can be linear or branched. Non-limiting examples of dialkyl carbonates include ethylene carbonate, propylene carbonate, diethyl carbonate, diallylcarbonate, methyl propyl carbonate, methyl isopropyl carbonate, methyl butyl carbonate, methyl isobutyl carbonate, methyl pentyl carbonate and methyl hexyl carbonate.

Non-limiting examples of cycloaliphatic ethers include oxirane, tetrahydrofuran, dioxane, dioxolane and dioxepane.

Non-limiting examples of liquid pyrrolidones include N-methylpyrrolidinone (NMP), N-ethyl-pyrrolidinone (NEP) and 2-pyrrolidone.

Non-limiting examples of aliphatic ketones include acetone, methyl ethyl ketone, diethyl ketone, methyl propyl ketone, methyl isopropyl ketone, methyl butyl ketone, methyl isobutyl ketone, methyl sec-butyl ketone and methyl tert-butyl ketone.

Non-limiting examples of liquid piperidines include formyl piperidine, N-methylpiperidine, N-ethylpiperidine and N-propylpiperidine.

Advantageously, the solvent is a non-volatile solvent. With a non-volatile solvent is meant a solvent having a boiling point of at least 150 °C, preferably at least 175 °C, more preferably at least 180 °C at an atmospheric pressure of 1 bar. By using a non-volatile solvent, evaporation of the solvent during the slurry preparation and casting process is avoided. Consequently, the pores are formed during the phase inversion in a controlled way, allowing control of the (average) pore size and the porosity degree of the porous electrode obtained. As a result the degree of porosity of the obtained porous electrodes is higher than when solvents having lower boiling points, such as boiling points below 100 °C at an atmospheric pressure of 1 bar (i.e. volatile solvents) are used. In said instance, solvent will already evaporate during slurry formation and casting, with an uncontrolled increase in the amount of polymer binder resulting in the formation of a less porous Imatrix.

Examples of non-volatile solvents include NMP, NEP, acetamide, dimethylsulphoxide (DMSO), formyl piperidine, s-carprolactam, γ-butyrolactone, ethylene carbonate, propylene carbonate, methyl butyl carbonate, methyl isobutyl carbonate, methyl pentyl carbonate, methyl hexyl carbonate, 2-pyrrolidone, N-methylpiperidine, N-ethylpiperidine, N-propylpiperidine, γ-valerolacetone, ε-caprolactone and δ-decalactone.

The inventors have surprisingly discovered that as long as the weight ratio of the polymeric binder material to the particles in the slurry is between 2:98 and 50:50 and the slurry comprises between 32 % and 80 % by weight of polymeric binder material and particles, based on the total weight of the slurry, the porous electrodes obtained by the methods of the present disclosure are self-standing (i.e. self-supporting). Consequently, the methods of the invention advantageously do not comprise a step of providing (e.g. attaching to, incorporating into) a supporting material, such as a supportive electronically conductive compound (e.g. a mesh, a grid, or a plate) for the porous electrode, the supporting material becoming an integral part of the porous electrode.

The inventors have discovered that when the weight ratio of the polymeric binder material to the particles in the slurry is outside of the aforementioned ranges and the slurry comprises less than 32 % by weight of total amount of polymeric binder material and particles, based on the total weight of the slurry, the porous electrode obtained from the slurry does not have sufficient electrochemically active material to function as a proper electrode. This is in particular the case when the weight ratio of the polymeric binder material to the particles in the slurry is outside of the range 30:70 to 50:50 and the slurry comprises less than 32 % by weight of polymeric binder material and particles, based on the total weight of the slurry, and is more in particular the case when the weight ratio of the polymeric binder material to the particles in the slurry is outside of the range 40:60 to 50:50 and the slurry comprises less than 32 % by weight of polymeric binder material and particles, based on the total weight of the slurry. Consequently these porous electrodes are not suitable for use as self-supporting porous electrodes.

Further, for slurries wherein the weight ratio of the polymeric binder material to the particles in the slurry is less than the 20:80 of the aforementioned ranges and the slurry comprises more than 80 % by weight of polymeric binder material and particles, based on the total weight of the slurry, there will be insufficient binder for shaping the electrodes, leading to mechanically unstable electrodes. This is in particular the case when the weight ratio of the polymeric binder material to the particles in the slurry is less than the 10:90 of the aforementioned ranges and the slurry comprises more than 80 % by weight of polymeric binder material and particles, based on the total weight of the slurry, and is more in particular the case when the weight ratio of the polymeric binder material to the particles in the slurry is less than the 5:95 of the aforementioned ranges and the slurry comprises more than 80 % by weight of polymeric binder material and particles, based on the total weight of the slurry.

The slurry can comprise further additives, such as for example a pore forming agent.

Advantageously, the slurry comprises up to 10 % by weight of pore forming agent, such as 7.5 % by weight, or 5 % by weight, based on the total weight of the slurry. A particularly preferred pore forming agent is polyvinylpyrrolidone (PVP).

The slurry can be prepared by methods known in the art.

According to a first embodiment, a first mixture is prepared by dissolving the polymeric binder material in a first portion of the solvent. A second mixture is prepared by adding the particles to the remainder of the solvent. Then, the first solution is added to the second mixture, or vice versa, thereby obtaining the slurry. If present, the pore forming agent is advantageously added to the second mixture.

According to a second embodiment, the polymeric binder material and the particles, and, if present, the pore forming agent, are added simultaneously or one after the other to the solvent, thereby obtaining the slurry.

The operation 3 of shaping the slurry into a green body can be performed by means of techniques known in the art. Particularly suitable techniques include casting, e.g. by extrusion, doctor blade casting or tape casting, electrospinning and additive manufacturing, e.g. 3D-printing.

The green body is then subjected to phase inversion in operation 4, thereby converting the dissolved polymeric binder material to a porous solidified form. In other words, phase inversion induces pores to the obtained electrode. The phase inversion can be performed by processes known in the art.

A preferred phase inversion process comprises liquid induced phase inversion (LIPS), vapour induced phase inversion (VIPS), or a combination of LIPS and VIPS. The liquid and the vapour, which may be a same or different compound are non-solvents to the polymeric binder material. Hence, in operation 4 the green body is contacted with a non-solvent (which may be in liquid phase and/or in vapor phase) for the polymeric binder material. This creates a demixing of the slurry in the green body in a phase rich of the polymeric binder material and a phase poor of the polymeric binder material. Upon further separation, the solubility of the solvent is further reduced and the polymeric binder material precipitates, thereby obtaining a matrix comprising the polymeric binder material, in which the particles comprising the electrochemically active material are dispersed.

Advantageously, the non-solvent comprises or substantially consists of a polar protic solvent. Non-limiting examples of suitable non-solvents for the polymeric binder materials of the invention include water, an alcohol, an acid, or combinations thereof. Particularly preferred non-solvents include water and mixtures of NMP and water, for example having a volume ratio of NMP to water between 0:100 (100% water) and 75:25, for example 50:50.

Advantageously, the phase inversion is induced by immersing the green body in the non-solvent and/or by contacting the electrode green body with a vapour of the non-solvent. Alternatively or additionally, yet advantageously, the non-solvent is atomised onto the green body.

It will be understood that the conditions of the phase-inversion process, as well as the choice of polymeric binder material, solvent, optional additives and non-solvent contribute to the degree of porosity and the size of the pores of the porous electrode obtained. In other words, phase inversion allows to control of the porosity and pore size of the porous electrode.

Alternatively, the phase inversion operation 4 comprises thermally induced phase inversion. Thermally induced phase inversion comprises the use of a solvent into which the polymer is dissolved at elevated temperatures, while the polymer is insoluble in the solvent at lower temperatures. The slurry is prepared 2 and shaped 3 at elevated temperature. The egreen body is then cooled to a temperature at which the polymeric binder material is insoluble in the solvent, thereby precipitating the polymeric binder material and obtaining the porous electrode.

The porous electrode structure can further be dried in an optional operation 5. Advantageously, the optional drying removes any remaining solvent and, if the phase inversion operation 4 was performed by means of a non-solvent for the polymeric binder material, any remaining non-solvent. Advantageously, the porous electrode is dried by exposing it to an elevated temperature (heating) and/or to a reduced pressure.

Advantageously, the drying operation 5 comprises heating the porous electrode structure to a temperature below the maximum continuous service temperature of the polymeric binder material as defined by the Underwriter Laboratory (UL 746B) Relative Thermal Index (RTI). The maximum continuous service temperature of the polymeric binder material is the maximum acceptable temperature above which the mechanical properties or the electrical properties of the polymeric binder material are significantly degrading over the reasonable lifetime of the porous electrode. Consequently, by heating to a temperature below the maximum continuous service temperature of the polymeric binder material, damage to the polymeric binder material in the porous electrode is avoided.

The porous electrode can also be subjected to one or more further post-treatment operations 6. Advantageously, upon performing a post-treatment operation 6, the contact between the particles comprising or substantially consisting of the electrochemically active material is improved, thereby improving the electrical conductivity of the porous electrode. Alternatively or additionally, yet advantageously, the post-treatment improves the immobilisation of the particles comprising or substantially consisting of the electrochemically active material in the porous matrix of the porous electrode, thereby reducing the risk of leaching of the electrochemically active material from the porous electrode.

Advantageously, the optional post-treatment operation 6 is performed at a temperature below the maximum continuous service temperature of the polymeric binder material as defined by the Underwriter Laboratory (UL 746B) Relative Thermal Index (RTI).

Non-limiting examples of post-treatment operations 6 include electroplating, immersion, thermal annealing and pressing/calendaring the porous electrode, for example with further components of the electrode, such as an electrode active material and/or a current collector.

The porous electrode of the present invention comprises or substantially consists of a porous matrix, which comprises or substantially consists of a polymeric binder material, and particles comprising or substantially consisting of an electrochemically active material. Advantageously, the particles are embedded in the matrix. The polymeric binder material and the particles are advantageously as described hereinabove.

The porous electrode comprises between 50 % and 98 % by weight of the particles and between 2 % and 50 % by weight of polymeric binder material, based on the total weight of the porous electrode.

The porous electrode is advantageously a self-standing electrode. The inventors have discovered that when the self-standing porous electrode of the present disclosure is connected to a current collector, an improved electrochemical performance and efficiency is obtained compared to porous electrodes which require a supportive structure, i.e. which are not self-standing. Without wishing to be bound by any theory, the inventors believe that the self-standing properties allow an improved electrical integration of the current collector, thereby improving the electrochemical performance and efficiency of the porous electrode.

The porous electrode has a porosity equal to or higher than 40 %, preferably at least 50 %, more preferably at least 60 %, as measured by mercury porosimetry. Advantageously, the porous electrode has a porosity of at most 90 %, preferably at most 80 %, as measured by mercury porosimetry. A porosity higher than 90 % leads to porous electrodes having insufficient mechanical strength, and are thus very prone to structural damage. A porosity below 30 % is found to be insufficient for providing a sufficient accessibility to the electrochemically active material.

Advantages of a porous electrode having a porosity between 30 % and 90 % include, without being limited thereto:
- a good accessibility of the electrochemically active material;
- a high electrochemical surface area of the porous electrode, in particular a high volumetric surface area (electrochemical surface area per volume unit of porous electrode), thereby providing more active sites for electrochemical reactions with the electrochemically active material;
- facilitated transport of ions and electrons in the porous electrode, thereby reducing the risk to ohmic and mass transfer losses;
- improved electrochemical performance and durability (life-time) of the porous electrode;
- a homogeneous distribution of the electrochemically active material throughout the obtained porous electrode.

Advantageously, the average pore size of the porous electrode is between 0.01 µm and 10 µm, preferably between 0.02 µm and 5 µm, more preferably between 0.05 µm and 1 µm, as determined by capillary flow porometry.

Advantageously, the porous electrode has a microporous volume of at least 20 %, preferably at least 25 %, more preferably at least 30 %, such as at least 40 % or at least 50 % of the microporous volume of the particles comprising or substantially consisting of the electrochemically active material, wherein the microporous volume is determined by the t-plot method on the argon isotherms at 87 K. With "microporous volume" is meant the total volume of micropores in an article, e.g. the porous electrode and the particles. Porous electrodes having such a microporous volume allow the diffusion of water and other reactants into the electrode material, and the diffusion of gas out of the electrode material. Consequently, the porous electrode is suitable for use in a water electrolyser.

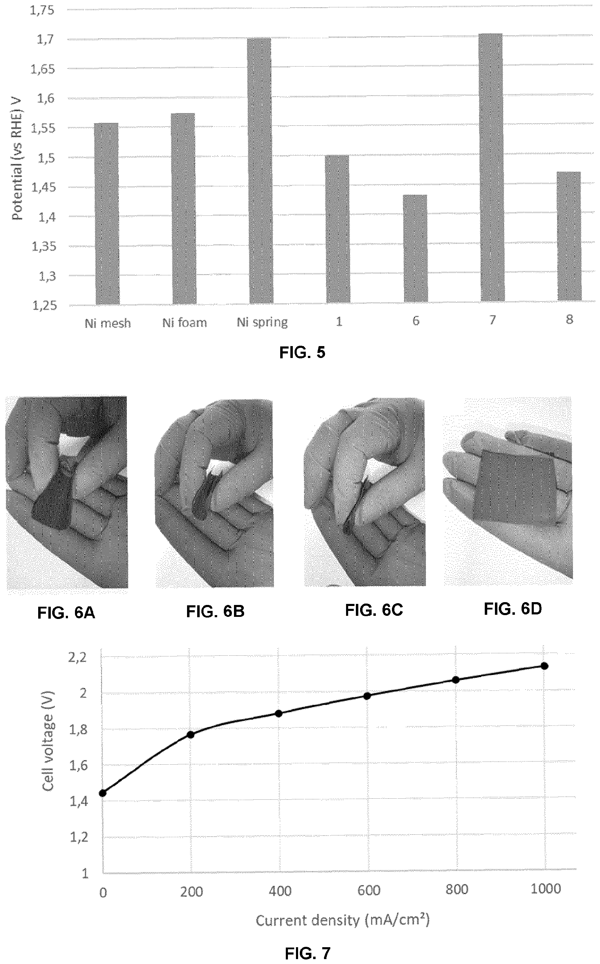

Advantageously, the porous electrode is flexible, which allows the electrodes to be cut and assembled into cell and stacks of different shape and structures. For example, when casted as a film, such film shaped electrodes according to the invention are fully bendable, i.e. can be bent to a bending radius near to 0°, which entails bending the film's opposite ends together as they come closer to one another, as seen in Figs. 6A to 6C. Afterwards, upon removing or stopping the bending pressure applied to the electrodes, they will come back to its original (flat) shape (see Fig. 6D).

Advantageously, the porous electrode has a thickness of at least 30 µm, such as at least 50 µm, or at least 100 µm, preferably at least 150 µm, more preferably at least 200 µm, most preferably at least 250 µm. Advantageously, the thickness of the porous electrode is at most 2000 µm, preferably at most 1500 µm, more preferably at most 1000 µm, most preferably at most 750 µm, for example at most 500 µm.

Advantageously, the porous electrode has an ex-situ gas permeability of between 0.001 and 1000 L/(min*cm²*bar), preferably between 0.01 and 500 L/(min*cm²*bar), for example between 0.05 and 250 L/(min*cm²*bar), between 0.1 and 100 L/(min*cm²*bar), more preferably between 0.2 and 50 L/(min*cm²*bar),, most preferably between 0.5 and 25 L(min*cm²*bar), as measured by capillary flow porometer.

Advantageously, the porous electrode has a volumetric surface area (VSA) of at least 0.02 m²/cm³, preferably at least 0.03 m²/cm³, more preferably at least 0.04 m²/cm³, such as at least 0.05 m²/cm³, or at least 0.075 m²/cm³, as measured by mercury porosimetry.

Advantageously, the porous electrode has an electrochemical surface area (ECSA) of at least 8 cm², as determined using a H-cell water electrolyser with a 1 M KOH solution as both catholyte and anolyte and a Fumasep^{®} FBM single-film bipolar membrane as a separator.

### Examples

### Example 1

12 different slurries were prepared according to Table 1, using polysulfone (PSU) as polymeric binder material, metallic nickel particles as particles comprising an electrochemically active material, and NMP as solvent. Optionally, PVP was added as pore-forming agent.

The nickel particles (Ni particles in Table 1) used are nanoparticles (having a size of at most 500 nm, in particular Ni particles having an average particle size of 100 nm) and microparticles (in particular Ni powder with an average particle size of 50 µm). They were added as only nanoparticles, only microparticles and as a mixture having a weight ratio of nanoparticles to microparticles of 50/50.

**Table 1: Compositions of different slurries**

| **Slurry No.** | **Ni particles (g)** | **Type of Ni particles** | **PSU (g)** | **NMP (mL)** | **PVP (g)** |
|---|---|---|---|---|---|
| 1 | 14 | micro | 6 | 30 | 0 |
| 2 | 14 | micro | 6 | 30 | 0 |
| 3 | 14 | micro | 6 | 30 | 1 |
| 4 | 14 | micro | 6 | 30 | 1 |
| 5 | 16 | micro | 4 | 26,67 | 1 |
| 6 | 16 | micro | 4 | 26,67 | 1 |
| 7 | 18 | micro | 2 | 16 | 1 |
| 8 | 18 | micro | 2 | 16 | 1 |
| 9 | 19 | micro | 1 | 10 | 1 |
| 10 | 18 | micro +nano | 2 | 16 | 1 |
| 11 | 19 | micro | 1 | 10 | 1 |
| 12 | 18 | micro + nano | 2 | 16 | 1 |
| 13 | 19 | micro | 1 | 10 | 1 |
| 14 | 18 | nano | 2 | 16 | 1 |
| 15 | 19 | nano | 1 | 10 | 1 |
| 16 | 19 | micro | 1 | 10 | 1 |

The slurries were prepared as follows: the PSU and the PVP, if any, were dissolved in half the volume of NMP by rotating the mixture for 2 min at 2000 rpm using a Thinky planetary centrifugal mixer (Thinky Corporation, U.S.A.). Then, half of the amount of nickel particles was added and the mixture was rotated a further 2 min at 2000 rpm. The remaining amount of nickel particles was then added, and the mixture was rotated again for 2 minutes at 2000 rpm. The remaining volume of NMP was then added, followed by rotating the slurry for 2 minutes at 2000 rpm. The slurry was then degassed for 1.5 min at 900 rpm.

The slurries were then poured onto a doctor blade and casted on a clean glass plate with a defined gap (for example a 200 µm gap for slurries Nos. 2 and 3) and at a speed of 0.25 m/min. It is known in the art that the casting knife thickness defines the final electrode thickness. The glass plates with the casted slurries (i.e. the electrode green bodies) were then placed in a coagulation bath containing 50/50 vol.% NMP/water, at room temperature for 30 minutes to induce phase inversion (all slurries except slurry No. 4). The glass plate with casted slurry number 4 was placed in a coagulation bath containing 75/25 vol.% NMP/water, at room temperature for 30 minutes to induce phase inversion. The obtained porous electrodes were then immersed in reverse osmosis water overnight, followed by heating them in water at 80 °C to remove any remaining solvent or PVP. Table 2 shows the thickness of the obtained porous electrodes. Fig. 2 shows one of the obtained porous electrodes, which can be manipulated and rolled up, in other words which is self-supporting and flexible.

**Table 2: porous electrode thickness**

| **Slurry No.** | **Thickness porous electrode (µm)** |
|---|---|
| 1 | 200 |
| 2 | 100 |
| 3 | 100 |
| 4 | 100 |
| 5 | 160 |
| 6 | 500 |
| 7 | 100 |
| 8 | 500 |
| 9 | 260 |
| 10 | 280 |
| 11 | 160 |
| 12 | 210 |
| 13 | 120 |
| 14 | 210 |
| 15 | 210 |
| 16 | 480 |

The porous electrodes obtained from slurries Nos. 7, 11, 12, 14 and 15 were then characterized in terms of density (bulk density and apparent density), porosity, average pore size (*Avg pore size*), total cumulative volume (*Total CV*) and total specific surface area (*Total SSA*)*.* The total cumulative volume is a measure of the total pore volume in the electrode. The results are presented in Table 3.

The porosity, the density, the total cumulative volume and the total specific surface area were measured by means of mercury porosimetry. The average pore size was measured by means of capillary flow porometry, using FC-40 as the wetting agent.

**Table 3: density, porosity, average pore size, total cumulative volume and total specific surface area of various porous electrodes of the invention**

| **Slurry No.** | **Bulk density (g/cm³)** | **Apparent density (g/cm³)** | **Porosity (%)** | **Avg pore size (µm)** | **Total CV (mm³/g)** | **Total SSA (m²/g)** |
|---|---|---|---|---|---|---|
| 7 | 1.62 | 6.54 | 75.2 | 0,116 | 464.9 | 4.5 |
| 11 | 1.84 | 7.62 | 75.8 | 0,805 | 412 | 3.3 |
| 12 | 1.47 | 5.21 | 71.7 | 0,357 | 487 | 7.1 |
| 14 | 1.50 | 5.77 | 73.9 | 0,123 | 492 | 14.2 |
| 15 | 1.96 | 8.28 | 76.3 | 0,228 | 390 | 13.6 |

The high total cumulative volume (CV) values confirm the porous nature of the electrodes prepared. Such total cumulative volume values are expected to play a positive role in enhancing the mass transport during water electrolysis operation.

The ex-situ gas permeability of the porous electrodes obtained from slurries Nos. 5 to 15 was determined by means of capillary flow porometry using compressed air at 1 bar. The results are presented in Table 4.

**Table 4: Air permeability of selected porous electrodes**

| **Slurry No.** | **Gas permeability (L/cm²/min)** |
|---|---|
| 5 | 0.70 |
| 6 | 1.24 |
| 7 | 2.69 |
| 8 | 2.99 |
| 9 | 16.56 |
| 10 | 3.19 |
| 11 | 24.18 |
| 12 | 5.65 |
| 13 | 27.02 |
| 14 | 1.11 |
| 15 | 9.91 |

The high gas permeability values of the porous electrode are due to the porous nature of the materials. This is expected to have an enhanced gas bubble removal from the active material sites during electrochemical application.

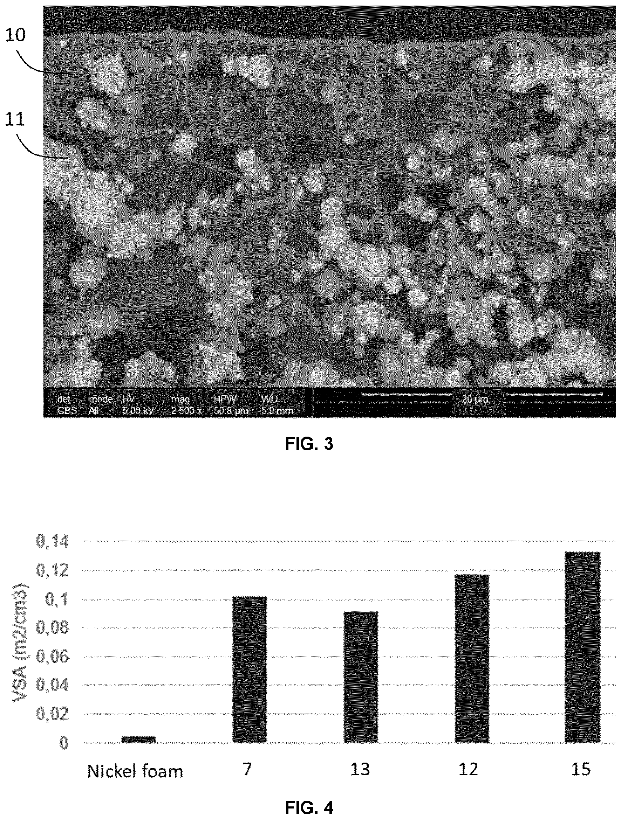

Fig. 3 shows the scanning electron microscopy (SEM) -image of the cross-section of the porous electrode obtained from slurry No. 8, showing a matrix of the PSU polymeric binder 10 comprising the nickel particles 11.

The volumetric surface area (VSA) of the electrodes obtained from slurries Nos. 7, 12, 13 and 15 was measured mercury porosimetry, and was compared to a nickel foam (NI00-FA-000152, goodfellow) as reference. The nickel foam had a thickness of 1.6 mm and a porosity of 95 %.

Fig. 4 shows the VSA results, from which it is clear that all porous electrodes of the invention that were tested (i.e. from slurries Nos. 7, 12, 13 and 15) have a significantly higher volumetric surface area than the nickel foam reference. It is also reported in the literature that nickel foams exhibit a volumetric surface area in the range of 0.001-0.008 m²/cm³.

The overpotential at 5 mA/cm² was determined for porous electrodes obtained from slurries Nos. 1, 6, 7 and 8, and for three references by means of the OCP and EIS as described hereinabove . The references were the nickel foam presented hereinabove, as well as a nickel mesh (400 mesh, 73 µm thickness, 30 µm pore size, available from Heanjia super metals Co., Ltd) and a nickel spring (knitted wire mesh, nickel 2.4066 wire diameter 0.16mm twice, from Rhodius GmbH i. Ins). The lower the overpotential, the more high performing the porous electrode. The results are presented in Fig. 5, from which it is clear that, except for the porous electrode obtained from slurry 6, the overpotential values of the porous electrodes of the invention are significantly lower than those of the reference electrodes, with the lowest value obtained when the particles are a mixture of nanoparticles and microparticles (slurry No. 9).

An H-cell water electrolyser was used to evaluate the electrochemical surface area (ECSA) and activity of the several of the porous electrodes. To this end, an H-cell was built using a 1 M KOH solution as both catholyte and anolyte and a Fumasep^{®} FBM single-film bipolar membrane as a separator. An Ag/AgCI reference electrode or RHE electrode was inserted close to the working electrode. A metallic Ni filter with an area of about 3 cm² was used as the counting electrode. The working electrode was clamped by a stainless-steel electrode holder with an area of approximately 1.5 cm² immersed in the electrolyte. Open-circuit potential (OCP) and electrochemical impedance spectroscopy (EIS) were performed prior to the electrochemical capacitance measurements. The potential range was a 0.1 V window centered on the OCP of the system to measure the non-Faradaic current response in the CV measurement. CV measurements were performed in static solution by sweeping the potential across this region from the more positive to the negative potential and back at 8 different scan rates: 5, 10, 25, 50, 100, 200, 400 and 800 mV/s. Scanning started after a 10-second waiting period and was repeated at least 10 times until the CV curve was stable. In this region, all current is assumed to be due to double-layer charging and the double-layer capacitance C can be measured from the charging current density I divided by the scanning rates. The electrochemical surface area (ECSA) of the electrode is calculated from the double-layer capacitance C divided by the specific capacitance of the sample or the capacitance of an atomically smooth planar surface of the material per unit area under identical electrolyte conditions.

The results are presented in Table 5. A higher ECSA is a measure for a more performant water electrolyser cell, and thus of a better performing porous electrode.

**Table 5: ECSA values of selected porous electrodes of Example 1**

| **Slurry No** | **ECSA (cm²)** |
|---|---|
| 1 | 22.5 |
| 2 | 8.8 |
| 3 | 5.0 |
| 5 | 11.8 |
| 6 | 75 |
| 7 | 17.2 |
| 9 | 45.8 |
| 12 | 33.8 |
| 13 | 13 |
| 14 | 0.9 |
| 15 | 33.8 |

The impact of the amount of nickel particles on the ECSA value is analysed by comparing the porous electrodes obtained from slurries Nos. 3 and 7, having the same thickness and the same Ni particle size ("micro"). It is clear that higher ECSA values are obtained for porous electrodes having an increasing amount of nickel particles and a decreasing amount of polymeric binder material and solvent.

The impact of the size of the nickel particles on the ECSA value is analysed by comparing the porous electrodes obtained from slurries Nos. 7 (micro, thickness 100 µm), 12 (micro + nano, thickness 210 µm) and 14 (nano, thickness 210 µm), all having the same weight of particles, PSU, NMP and PVP. It is clear that the best result is obtained for porous electrodes comprising nickel particles having a bimodal particle size distribution, i.e. comprising both fine and coarser particles ("micro+nano"). The ECSA value for the porous electrode obtained with only nanoparticles is significantly lower than for the porous electrode obtained with only microparticles. It is believed that when only nanoparticles are used, a larger amount (weight) of particles is required to obtain a sufficient electrical connection between the particles.

The impact of the thickness of the porous electrodes is analysed by comparing porous electrodes obtained from slurries Nos. 5 (thickness 160 µm) and 6 (thickness 500 µm), as well as from slurries 9 (thickness 260 µm) and 13 (thickness 120 µm), wherein the slurries Nos. 9 and 13 comprise a higher weight of nickel particles and a lower amount of PSU and solvent than the slurries Nos. 5 and 6. It is clear that a higher thickness leads to a higher ECSA value.

### Example 3

An alkaline water electrolyser cell (13 cm²) was developed using home-made composite membrane (about 200 µm thick) to evaluate the performance of the developed porous electrodes at high operating temperature (70 °C) and pressure (10 bar). 30 wt.% KOH was used as anolyte and catholyte solution. An electrode made using slurry No. 16 was tested as both anode and cathode. Fig. 7 shows the shows the polarization curve, expressing the delivered cell voltage in function of the current density. The cell delivered a cell voltage of 2.13 V at a high current density of 1000 mA/cm²), indicating an excellent and even unexpectedly good performance. The minimal cell voltage, which denotes the minimal energy needed to produce hydrogen, was 1.45 V, and is a sign of an effective water electrolyser cell.

## Claims

1. A method (1) for producing a porous electrode comprising the steps of:
- preparing (2) a slurry comprising a solvent, between 1 % and 25 % by weight of a polymeric binder material and between 10 % and 80 % by weight of particles comprising an electrochemically active material, based on the total weight of the slurry, wherein the polymeric binder material is at least partially dissolved in the solvent,
- shaping (3) the slurry, thereby obtaining a green body,
- subjecting the green body to phase inversion (4), thereby forming the porous electrode, wherein the porous electrode comprises a porous matrix and the particles comprising the electrochemically active material, wherein the porous matrix comprises the polymeric binder material,
**characterized in that** the weight ratio of the polymeric binder material to the particles in the slurry is between 2:98 and 50:50, and a total amount of the polymeric binder material and the particles in the slurry is between 32 % and 80 % by weight, based on the total weight of the slurry.

2. The method according to claim 1, wherein the electrochemically active material is an electrochemically active metal selected from the group consisting of nickel, tin, copper, iron, manganese, cobalt, zinc, titanium, bismuth, selenium, and noble metals.

3. The method according to any one of the preceding claims, wherein the electrochemically active material is present in the particles as one or a combination of a metallic solid, a metal oxide, or a metal dichalcogenide.

4. The method according to any one of the preceding claims, wherein the particles have an average particle size between 5 nm and 200 µm, preferably between 10 nm and 100 µm, as measured by means of Scanning Electron Microscopy.

5. The method according to any one of the preceding claims, wherein the particles have a bimodal particle size distribution.

6. The method according to claim 5, wherein between 25 % and 75 % of the particles have an average particle size between 1 µm and 250 µm, and between 75 % and 25 % of the particles have an average particle size between 5 nm and 500 nm.

7. The method according to any one of the preceding claims, wherein the polymeric binder material comprises a non-ion conductive polymer.

8. The method according to any one of the preceding claims, wherein the slurry further comprises between 1 % and 10 % by weight of a pore forming agent, based on the total weight of the slurry.

9. The method according to any one of the preceding claims, wherein the solvent has a boiling point of at least 180 °C at an atmospheric pressure of 1 bar.

10. The method according to any one of the preceding claims, wherein shaping (3) the slurry comprises one or a combination of electrospinning, casting, or 3D-printing of the slurry.

11. The method according to any one of the preceding claims, wherein phase inversion (4) of the green body comprises contacting the green body with a non-solvent for the polymeric binder material so as to precipitate the polymeric binder material, thereby obtaining the porous electrode.

12. The method according to claim 11, wherein the solvent comprises a polar aprotic solvent and the non-solvent for the polymeric binder material comprises a polar protic solvent.

13. A porous electrode comprising a porous matrix (10) comprising a polymeric binder material, and particles comprising an electrochemically active material (11), wherein the porous electrode comprises between 50 % and 98 % by weight of the particles and between 2 % and 50 % by weight of polymeric binder material, based on the total weight of the porous electrode, **characterized in that** the porous electrode has a porosity equal to or higher than 40 %, as measured by mercury porosimetry.

14. The porous electrode according to claim 13, wherein the pores have an average pore size between 0.05 µm and 5 µm, preferably between 0.1 µm and 5 µm, more preferably between 0.1 µm and 1 µm, as determined by means of capillary flow porometry.

15. The porous electrode according to claim 13 or 14, wherein the porous electrode has an ex-situ gas permeability between 0.50 and 50 L/min/cm²/bar, preferably between 0.60 and 30 L/min/cm²/bar, more preferably between 0.70 and 30 L/min/cm²/bar, as determined by means of capillary flow porometry.

16. A water electrolyser comprising the porous electrode according to any one of claims 13 to 15, or a porous electrode obtained according to the method of any one of claims 1 to 12.
